# EUROPÄISCHE PATENTSCHRIFT

(11) **EP 2 791 541 B1**
(45) Veröffentlichungstag und Bekanntmachung des Hinweises auf die Patenterteilung: **20.04.2016**
(21) Anmeldenummer: 12809178.2
(22) Anmeldetag: 13.12.2012
(51) Int. Cl.: F16D 65/28, F16D 51/10, F16D 125/66

(54) **BREMSSYSTEM FÜR NUTZFAHRZEUGE**
BRAKE SYSTEM FOR UTILITY VEHICLES
SYSTÈME DE FREINAGE POUR VÉHICULES UTILITAIRES

(30) Priorität: 16.12.2011 DE 102011088848
(43) Veröffentlichungstag der Anmeldung: 22.10.2014
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2012/075315
(87) Internationale Veröffentlichungsnummer: WO 2013/087741

(56) Entgegenhaltungen:
- US-A- 2 501 578
- US-A- 4 350 230

## Beschreibung

Die vorliegende Erfindung betrifft ein Bremssystem für Nutzfahrzeuge umfassend eine Aktuatoreinheit, eine Wandlereinheit und eine Übertragungseinheit.

Bremssysteme der in der Rede stehenden Art sind aus dem Stand der Technik hinlänglich bekannt. Es sind dabei ein oder mehrere Bremsbackenelemente schwenkbar und gegen Rotation gesichert und mit dem Fahrzeugrahmen verbunden und können mittels eines Spreizelements gegen die Innenseite einer rotierenden Bremstrommel gepresst werden. Dabei findet jedoch die Kraftübertragung durch Reibung der Bremsbackenelemente an der Bremstrommel nicht gleichmäßig über die gesamte Umfangsfläche der Bremsbackenelemente statt und sowohl eine verminderte Bremswirkung als auch eine ungleichmäßige Abnutzung der Bremsbackenelemente ist die Folge. Dabei tritt nicht nur eine ungleichmäßige Abnutzung entlang des Umfangs einer Bremsbacke auf, sondern auch unterschiedliche Abnutzung an der jeweils mit der Rotationsrichtung des Trommelelements schwenkenden Bremsbacke und der entgegen der Rotationsrichtung der Bremstrommel schwenkenden Bremsbacke, wobei erhöhte Kosten durch die nicht vollständige Ausnutzung des an den Bremsbackenelementen vorgesehenen Bremsbelages die Folge sind.

Die US 2,501,578 A offenbart ein Bremssystem für Nutzfahrzeuge, umfassend eine Betätigungseinheit, ein Übertragungselement und eine Wandlereinheit, wobei die Betätigungseinheit das Übertragungselement entlang einer Übertragungsachse verlagert, wobei die Wandlereinheit auf einer Radachse angeordnet ist und zumindest ein Kolbenelement aufweist, wobei die Wandlereinheit ein Gehäuse aufweist, welches einstückig mit einem ersten Achselement ausgebildet ist, wobei die Übertragungsachse die Radachse zumindest im Bereich der Wandlereinheit schneidet, und wobei das Übertragungselement ausgelegt ist, eine Kraft auf das Kolbenelement zu übertragen, um dieses quer zur Radachse zu verlagern, wobei das Übertragungselement zumindest abschnittsweise in einer Ummantelung geführt ist, und wobei die Ummantelung die Betätigungseinheit gegen die Wandlereinheit abstützt.

Aufgabe der vorliegenden Erfindung ist es ein Bremssystem bereitzustellen, welches zum einen eine hohe Bremswirkung bzw. hohe Bremskräfte erzeugen kann und zum anderen eine gleichmäßige Abnutzung der auf die Bremsbackenelemente aufgebrachten Bremsbeläge ermöglicht.

Diese Aufgabe wird gelöst mit einem Bremssystem gemäß Anspruch 1. Weitere Vorteile und Merkmale der Erfindung ergeben sich aus den abhängigen Ansprüchen.

Erfindungsgemäß umfasst das Bremssystem, welches insbesondere als Bremssystem einer Spreizkeiltrommelbremse bzw. als Spreizkeiltrommelbremssystem ausgebildet ist, eine Betätigungseinheit, ein Übertragungselement und eine Wandlereinheit, wobei die Betätigungseinheit das Übertragungselement entlang einer Übertragungsachse verlagert, wobei die Wandlereinheit auf einer Radachse angeordnet ist und zumindest ein Kolbenelement aufweist, wobei die Übertragungsachse die Radachse zumindest im Bereich der Wandlereinheit schneidet und wobei das Übertragungselement ausgelegt ist, eine Kraft auf das Kolbenelement zu übertragen, um dieses quer zur Radachse zu verlagern. Die Betätigungseinheit ist bevorzugt ein pneumatisch oder hydraulisch betriebener Bremszylinder, welcher ausgelegt ist, das Übertragungselement in eine Translationsbewegung zu versetzen. Zweckmäßigerweise weist die Betätigungseinheit hierfür einen Betätigungsbolzen auf, welcher eine Kraft längs einer Übertragungsachse in eine Translationsbewegung umsetzt und umgekehrt. Das Übertragungselement ist bevorzugt ein länglicher und sich im Wesentlichen längs der Übertragungsachse erstreckender Körper, welcher dazu dient eine von der Betätigungseinheit aufgebrachte Kraft an die Wandlereinheit zu übertragen. Insbesondere bevorzugt ist die Wandlereinheit eine Spreizkeileinheit einer Spreizkeiltrommelbremse. Bevorzugt ist das Übertragungselement stabförmig ausgebildet, wobei es einen insbesondere bevorzugt kreisförmigen Querschnitt aufweist. Die Wandlereinheit ist erfindungsgemäß auf einer Radachse angeordnet, wobei die Radachse insbesondere bevorzugt die Rotationsachse des rotierenden Rades des Nutzfahrzeuges ist. Insbesondere bevorzugt ist die Radachse dadurch gekennzeichnet, dass sie gleichzeitig die Achse ist, um die ein Achsstummelelement rotationssymmetrisch ausgebildet ist. Im Bereich der Wandlereinheit schneidet die Radachse die Übertragungsachse, wobei erfindungsgemäß in diesem Bereich das Übertragungselement in die Wandlereinheit hineinragt und die von der Betätigungseinheit aufgebrachte Kraft an die Wandlereinheit überträgt. Dies ist besonders vorteilhaft bei einer Ausgestaltung der Bremse als Spreizkeiltrommelbremse. Dabei dient die Wandlereinheit besonders bevorzugt der Umwandlung der Bewegung des Übertragungselements längs der Übertragungsachse in eine Bewegung eines Kolbenelements quer zur Radachse. Bevorzugt können auch zwei Kolbenelemente vorgesehen sein, welche sich entlang jeweils kollinear zueinander ausgerichteter Bahnen quer zur Radachse verlagern, wobei die Wandlereinheit die Translationsbewegung des Übertragungselements in zwei einander entgegen gerichtete Translationsbewegungen der Kolbenelemente wandelt.

In bevorzugter Weise ist ein Backenelement vorgesehen, das quer zur Radachse verlagerbar ist, wobei das Backenelement an seiner der Radachse gegenüberliegenden Seite bevorzugt einen Bremsbelag aufweist. Bevorzugt ähnelt das Backenelement einer aus dem Stand der Technik bekannten Bremsbacke einer Spreizkeiltrommelbremse, wobei an der nach außen weisenden Fläche des Backenelements ein Bremsbelag vorgesehen ist. Dabei weist das Backenelement an der, der Radachse gegenüber liegenden Seite bevorzugt eine Wölbung auf, wobei der mittlere Radius dieser Wölbung bevorzugt gleich dem Innenradius einer um das Bremssystem rotierenden Bremstrommel ist. Auf diese Weise ist gewährleistet, dass bei Verlagerung des Backenelements gegen die Innenseite der Bremstrommel die gesamte Fläche des Bremsbelages, welcher an der nach außen weisenden Seite des Backenelements angebracht ist, mit der Bremstrommel in Kontakt tritt und eine Reibpaarung bildet. Insbesondere bevorzugt ist es, zwei Backenelemente vorzusehen, welche jeweils an gegenüberliegenden Seiten der Radachse angeordnet sind. In vorteilhafter Weise wird das Backenelement bevorzugt nicht geschwenkt, sondern führt ausschließlich eine Translationsbewegung entlang einer quer zur Radachse verlaufenden Richtung aus. Auf diese Weise kann gewährleistet werden, dass das Backenelement mit seiner zur Innenseite der Bremstrommel hinweisenden Fläche bzw. mit dem Bremsbelag vollständig in Kontakt mit der Innenfläche der Bremstrommel treten kann, wobei maximale Bremskräfte bzw. Reibungskräfte entwickelt werden können und eine maximale Bremswirkung erzielbar ist.

Ferner bevorzugt ist das Kolbenelement ausgelegt, eine Kraft auf das Backenelement auszuüben, um das Backenelement quer zur Radachse zu verlagern und in eine Position zu bringen, in welcher das Backenelement bremst. Eine der wesentlichen Hauptaufgaben des Kolbenelements ist es, eine Kraft auf das Backenelement auszuüben und dieses quer zur Radachse derart zu verlagern, dass der Abstand zur Radachse vergrößert wird. Dabei dient das Kolbenelement gleichzeitig als Richtungswandler der Kraft, die vom Übertragungselement auf das Kolbenelement übertragen wird und über das Kolbenelement weiter an das Backenelement geleitet wird. Bei der besonders bevorzugten Ausführungsform mit zwei Kolbenelementen, die sich entlang kollinearer Bahnen bzw. Richtungen auf je einer Seite der Radachse von der Radachse wegbewegen, können bevorzugt zwei Backenelemente an jeweils gegenüberliegenden Seiten der Radachse gegen die Innenfläche einer Bremstrommel gepresst werden. Es ist insbesondere bevorzugt, dass das Kolbenelement eine Justiervorrichtung aufweist, welche es ermöglicht die Position des Backenelements relativ zur Radachse je nach Verschleiß des Bremsbelags am Backenelement, d. h. abhängig von der Dicke des Bremsbelags am Backenelement anzupassen. Weiterhin kann es bevorzugt sein, dass das Kolbenelement eine Kraft auf das Backenelement nur in einer Richtung ausübt, wobei ein Rückstellelement vorgesehen ist, um Kolbenelement und Backenelement wieder in eine Ruhlage, das heißt in eine Lage, in der das Backenelement nicht in Kontakt mit der Bremstrommel steht, zu bringen.

In vorteilhafter Weise ist ein Rückstellelement vorgesehen, durch welches das Backenelement gegen das Kolbenelement und/oder ein gegenüber liegendes Backenelement gehalten ist. Insbesondere bevorzugt ist es mit anderen Worten, dass ein Rückstellelement das Backenelement gegen das Kolbenelement gepresst hält. Besonders bevorzugt können zwei gegenüberliegende Backenelemente vorgesehen sein, wobei das Rückstellelement an beiden Backenelementen angreift, diese aufeinander zu verlagert und dabei auch jeweils auf die Wandlereinheit bzw. jeweils zwei gegenüberliegende Kolbenelemente zu verlagert. Dabei kann das Rückstellelement sowohl als Blattfeder als auch als Spiralfeder ausgelegt sein, wobei die Federkraft ausreichend sein muss um auch bei auftretenden Verschmutzungen in der Trommelbremse, beispielsweise durch abgeriebenen Bremsbelag, eine ordnungsgemäße Rückstellung der Backenelemente und damit ein ordnungsgemäßes Lösen der Bremse, bzw. der Spreizkeiltrommelbremse zu ermöglichen.

In insbesondere bevorzugter Ausführung ist eine Führungseinheit vorgesehen, um das Backenelement auf einer quer zur Radachse liegenden Bahn zu halten. Das Backenelement wird im Wesentlichen zwischen zwei Positionen verlagert: Einer ersten Position, in welcher das Backenelement nicht in Kontakt mit der Bremstrommel steht und der Abstand des Backenelements zur Radachse minimal ist und einer zweiten Position, in welcher das Backenelement gegen das Bremstrommelelement gepresst ist, Reibung zwischen dem Backenelement und der Bremstrommel stattfindet und der Abstand des Backenelements zur Radachse maximal ist. Um das Backenelement zwischen diesen beiden Positionen zu führen, ist bevorzugt eine Führungseinheit vorgesehen, welche mit Vorteil nur die Verlagerung zwischen der ersten und der zweiten Position für das Backenelement zulässt. Insbesondere bevorzugt sichert die Führungseinheit das Backenelement gegen Verlagerung in Umfangsrichtung, das heißt in Richtung einer Rotation um die Radachse. Dieses ist notwendig, da auf das Backenelement wirkende Bremskräfte im Wesentlichen in Umfangsrichtung wirken und entsprechend von der Führungseinheit, welche das Backenelement stützt, aufzunehmen sind. Die Bahn, entlang derer sich das Backenelement verlagert, ist bevorzugt geradlinig. Es ist alternativ aber auch möglich, beispielsweise im Bereich der zweiten Position, eine leicht gekrümmte Bahn vorzusehen um beispielweise die Bremskraft zwischen Backenelement und Bremstrommel zu erhöhen, indem das Backenelement unter Ausnutzung der Umfangskomponenten der Bremskraft stärker gegen die Bremstrommel gepresst wird. Dabei ist jedoch darauf zu achten die Bahnkrümmung nicht zu stark auszulegen, da ansonsten das Backenelement in der zweiten Position verklemmen kann und nicht mehr von der Bremstrommel zu lösen ist.

In bevorzugter Weise weist die Führungseinheit zwei parallel zueinander stehende Führungsschenkel auf, zwischen deren einander zugewandten Flächen das Backenelement geführt ist. Dabei ist es bevorzugt, dass die Führungsschenkel derart ausgelegt sind, dass sie Kräfte in Umfangsrichtung besonders gut aufnehmen und an das nicht rotierende Fahrwerksystem des Nutzfahrzeuges weiterleiten können. Besonders bevorzugt kann hierbei die Auslegung der Führungsschenkel als T-Träger sein, wobei die oben liegende Fläche des T gleichzeitig die Führungsfläche für das Bremsbackenelement ist. Weitere bevorzugte Querschnittskonfigurationen, die sich durch ein hohes Flächenträgheitsmoment auszeichnen, können U-, L-, oder doppel-T-förmig ausgebildet sein. Gleichzeitig kann es bevorzugt sein, dass der in Rotationsrichtung der Bremstrommel vorn liegende Führungsschenkel stabiler dimensioniert ist, d. h. bspw. biegesteifer, ausgelegt ist als der nach hinten weisende Führungsschenkel. Da im Allgemeinen höhere Bremskräfte bei der Vorwärtsfahrt des Nutzfahrzeuges zu erwarten sind als bei der Rückwärtsfahrt, ist es zweckmäßig den vorn liegenden Führungsschenkel zur Aufnahme höherer Kräfte auszulegen als den hinteren Führungsschenkel. Auf diese Weise kann durch Materialeinsparung am hinteren Führungsschenkel bevorzugt Gewicht eingespart werden. Insbesondere kann es bevorzugt sein, dass die Führungsschenkel Längsnuten aufweisen, in welchen entsprechende Vorsprünge am Bremsbackenelement eingreifen, um das Bremsbackenelement nicht nur gegen Verlagerung in Umfangsrichtung, sondern auch gegen Verlagerung längs der Radachse zu sichern. In einer alternativ bevorzugten Ausführungsform kann die Führungseinheit statt der Führungsschenkel eine Schiene aufweisen, welche in einen entsprechenden Rücksprung bzw. eine entsprechende Längsnut am Backenelement eingreift und das Backenelement in beide Umfangsrichtungen, d. h. sowohl vorwärts als auch rückwärts rotierend sichert. Dabei greift die Schiene der Führungseinheit bevorzugt in eine Hinterschneidung der Aussparung am Backenelement ein, um das Backenelement gegen Verlagerung längs der Radachse zu sichern. Bevorzugt ist es, dass die Führungseinheit mittelbar oder unmittelbar mit dem Achsrohr des Nutzfahrzeuges verbunden ist, wobei die bei Bremsvorgängen auftretenden Kräfte und Momente direkt auf das Achsrohr übertragen werden.

Von Vorteil ist es, wenn die Radachse zur Übertragungsachse um einen Winkel α versetzt bzw. verschwenkt bzw. geneigt ist, welcher vorzugsweise in einem Bereich von 0° bis 85°, bevorzugt 0° bis 75° und insbesondere bevorzugt bei ca. 55° liegt. Mittels des Winkelversatzes der Radachse zur Übertragungsachse ist es möglich, die Wandlereinheit zentral auf der Radachse anzuordnen und gleichzeitig ein im Wesentlichen durchgehendes Achsrohr bzw. eine Kombination aus Achsrohr und Achsstummel zu verwenden. Dabei ist, wenn α gegen Null geht, die Übertragungsachse im Wesentlichen parallel zu Radachse angeordnet, wobei das Achsrohr anderweitig an dem Bremssystem, bzw. dem Achsstummel festgelegt ist, da an der Stelle des Achsrohres die Betätigungseinheit vorgesehen ist. Der Winkel α wird bevorzugt kleiner als 85° gewählt, da in einem Bereich von mehr als 85° bereits das Rad des Nutzfahrzeuges rotierend angeordnet ist und somit mit dem Bremszylinder kollidieren könnte. Abhängig von den geometrischen Gegebenheiten am Fahrwerksystem des Nutzfahrzeuges ist es bevorzugt, einen Winkel in einem Bereich von 0° bis 85° vorzusehen, wobei der insbesondere bevorzugte Winkel bei 45° liegt, da auf diese Weise eine besonders kompakte Bauweise des Bremssystems und damit auch des restlichen Fahrwerkssystems des Nutzfahrzeuges erreichbar ist.

Besonders bevorzugt sind die Flächen der Führungsschenkel der Führungseinheit senkrecht zur von der Radachse und der Übertragungsachse aufgespannten Ebene ausgerichtet. Im Fall, dass die Radachse und die Übertragungsachse um einen Winkel α größer 0° zueinander verdreht angeordnet sind, spannen beide Achsen eine Ebene auf. Um das Übertragungselement besonders gleichmäßig in die Wandlereinheit ein- und ausführen zu können und eine besonders günstige Kraftübertragung von Übertragungselement zu Kolbenelement zu ermöglichen, ist es bevorzugt, dass die Verlagerungsrichtung der Kolbenelemente und insbesondere bevorzugt auch die Flächen der Führungsschenkel der Führungseinheit, welche das Backenelement führen, senkrecht zu der von den Achsen aufgespannten Ebene ausgerichtet sind. Mithilfe dieses Merkmals ist es möglich den Winkel zwischen Radachse und Übertragungsachse beliebig zu verändern, ohne dabei die Funktion des Bremssystems zu beinträchtigen.

Ferner bevorzugt ist es, dass die Wandlereinheit ein Gehäuse aufweist, welches einstückig mit einem ersten Achselement ausgebildet ist, wobei das Gehäuse der Wandlereinheit bevorzugt durch zumindest eine Aussparung im ersten Achselement gebildet ist. Um eine möglichst kompakte und integrale Bauweise des Bremssystems zu erreichen, ist es insbesondere bevorzugt, das Gehäuse der Wandlereinheit in ein erstes Achselement zu integrieren. Dabei kann das erste Achseelement beispielsweise der Achsstummel der Achse eines Nutzfahrzeuges sein, wobei in diesem Fall die Wandlereinheit an einem, dem Lagerbereich für das Radlager gegenüberliegenden Ende des ersten Achselements angeordnet ist. Bedingt durch die notwendige Einbringung von Aussparungen an dem Gehäuse der Wandlereinheit ist es bevorzugt, die übrigen Bereiche des ersten Achselements und/oder des Gehäuses zu verstärken, bspw. mit Hilfe von Materialstegen, welche die durch die eingebrachten Aussparungen verminderte Biegefestigkeit des ersten Achselements und/oder des Gehäuses wieder erhöhen. Insbesondere bevorzugt ist es, dass das Gehäuse der Wandlereinheit und das erste Achselement integral, bzw. einstückig mittels eines Gussverfahrens hergestellt sind, wobei das erste Achselement gemeinsam mit dem Gehäuse der Wandlereinheit an ein zweites Achselement, beispielsweise das Achsrohr, anschweißbar ist und auf diese Weise eine möglichst kompakte Bauweise erzielbar ist. Alternativ bevorzugt kann es sein, dass das erste Achselement mittels eines Reibschweißverfahrens am Gehäuse der Wandlereinheit festlegbar ist, wobei das Gehäuse der Wandlereinheit einstückig bzw. integral mit einem zweiten Achselement ausgebildet ist.

Bevorzugt ist das Übertragungselement zumindest abschnittsweise in einer Ummantelung geführt, wobei die Ummantelung die Betätigungseinheit gegen die Wandlereinheit abstützt. Die Ummantelung des Übertragungselements ist dabei bevorzugt rohr- bzw. hülsenförmig, und übernimmt zum einen die Funktion, das Übertragungselement und das restliche Bremssystem gegen das Eindringen von Schmutz bzw. Fremdkörpern zu sichern und zum anderen auch Kraftübertragungsfunktionen. So verhindert während des Bremsvorgangs, wenn das Übertragungselement von der Betätigungseinheit in die Wandlereinheit eingedrückt wird bzw. hineinverlagert wird, die Ummantelung, dass sich die Betätigungseinheit von der Wandlereinheit entfernt. Zum Zwecke der Kraftübertragung weist die Ummantelung bevorzugt an ihren beiden längs der Übertragungsrichtung verlaufenden Enden jeweils einen Flansch auf, über welchen die Ummantelung sowohl mit der Betätigungseinheit als auch mit der Wandlereinheit kraftschlüssig bzw. formschlüssig verbunden ist. Alternativ dazu kann es auch bevorzugt sein, die Ummantelung mittels einer Schweißverbindung an der Betätigungseinheit und/oder der Wandlereinheit festzulegen.

In einer bevorzugten Ausführungsform ist das Gehäuse der Wandlereinheit einstückig mit der Ummantelung und/oder der Führungseinheit ausgebildet. Um Gewicht einzusparen, beispielweise durch Vermeidung von zusätzlichen Befestigungselementen wie Schrauben oder Bolzen, und um den Montageaufwand für das Bremssystem zu verringern, ist es bevorzugt möglichst viele Komponenten einstückig auszuführen. Weiterhin ist es vorteilhaft, das Gehäuse der Wandlereinheit und/oder die Führungseinheit als tragende Komponenten der Achse des Nutzfahrzeuges auszubilden. So kann beispielsweise das Gehäuse der Wandlereinheit einstückig mit der Ummantelung und/oder der Führungseinheit ausgeführt sein, wobei die jeweiligen Komponenten bevorzugt in einem einzigen Gussschritt hergestellt sein können. Insbesondere bevorzugt ist dies, da durch eine einstückige Gussausführung auch eine Kraftübertragung zwischen den einzelnen Elementen auf besonders einfache Weise und besonders günstig lösbar ist. So kann, wenn beispielsweise die Führungsschenkel der Führungseinheit einstückig mit dem Gehäuse der Wandlereinheit ausgeführt sind, die Kraftübertragung vom Bremselement über die Führungsschenkel hin zum Gehäuse der Wandlereinheit besonders günstig gelöst werden, wenn insbesondere bevorzugt die Wandlereinheit einstückig mit beispielsweise dem ersten und/oder dem zweiten Achselement ausgebildet ist. Weiterhin kann die Ummantelung des Übertragungselements einstückig mit dem Gehäuse der Wandlereinheit ausgebildet sein, wobei zur Montage des Bremssystems lediglich die Betätigungseinheit, beispielsweise mittels einer kraftschlüssigen Verbindung über eine Schraube, an der Ummantelung festzulegen ist.

In bevorzugter Weise weist das Übertragungselement an seinem der Betätigungseinheit abgewandten distalen Ende eine zur Betätigungseinheit hin zunehmende Querschnittdicke auf, wobei das Kolbenelement mit seiner zur Radachse weisenden Seite auf dem Übertragungselement mittelbar oder unmittelbar aufliegt. In anderen Worten kann das distale Ende des Übertragungselements als Spreizkeil, insbesondere bevorzugt zum Einsatz in einer Spreizkeiltrommelbremse, ausgebildet sein. Als Querschnittdicke des Übertragungselements wird bevorzugt die Erstreckung des Übertragungselements quer zur Übertragungsachse definiert. An seinem der Betätigungseinheit gegenüberliegenden distalen Ende weist das Übertragungselement eine zur Betätigungseinheit hin zunehmende Querschnittsdicke auf, beispielsweise als keilförmigen oder kegelförmigen Abschnitt. Abhängig vom Grad der Zunahme der Querschnittsdicke bzw. abhängig von der Steigung der kegel- oder keilförmigen Geometrie, führt eine bestimmte Verlagerung des Übertragungselements längs der Übertragungsachse zu einer bestimmten Verlagerung der Kolbenelemente quer zur Radachse. Je steiler dabei der Anstieg der keilförmigen Geometrie des Übertragungselements ist, desto höher ist die Kraft die auf das Übertragungselement wirken muss, um eine bestimmte Bremswirkung durch die Verlagerung von Kolbenelementen und Backenelementen gegen die Bremstrommel zu erreichen. Wird die Steigung der keilförmigen Geometrie flacher gehalten, so muss ein längerer Weg des Übertragungselements zurückgelegt werden, um eine gleiche Verlagerung des Kolbenelements quer zur Radachse zu erreichen wie sie erreicht worden wäre bei einer steileren Steigung und einer geringeren Weglänge der Verschiebung des Übertragungselements längs der Übertragungsachse. Dabei kann das Kolbenelement unmittelbar, das heißt direkt bzw. Fläche an Fläche, am Übertragungselement anliegen oder mittelbar, das heißt beispielsweise über Walzen-, Kugel- oder Rollenkörper oder einen gleitunterstützenden Zwischenkörper, an dem Übertragungselement anliegen. Der Nachteil eines unmittelbaren Kontakts zwischen der zur Radachse weisenden Fläche des Kolbenelements und dem Übertragungselement ist, dass durch die auftretende Reibung während des Verschiebevorgangs des Übertragungselements Energie verloren geht, die ansonsten für eine Erzeugung einer Bremskraft zur Verfügung stehen würde. Daher ist es insbesondere bevorzugt das Kolbenelement an seiner zur Radachse weisenden Seite mit Walzen, Kugeln oder Rollen auszustatten, welche drehbar am Kolbenelement gelagert sind und mit einem vergleichsweise geringen Rollwiderstand entlang der bevorzugt keilförmigen Fläche des Übertragungselements abrollen können. Dies ermöglicht insbesondere auf Schmiermittel, wie beispielsweise Fett oder Öl, verzichten zu können, welche ihrerseits eine Gefährdung für das Bremssystem darstellen können, da sie sich bei den auftretenden hohen Temperaturen entzünden können.

Vorzugsweise verläuft die Richtung der Kraftübertragung von Übertragungselement zu Kolbenelement bzw. die Verlagerungsachse bzw. -linie des Kolbenelements durch den Schnittpunkt von Radachse und Übertragungsachse. Auf vorteilhafte Art und Weise kann die Gefahr des Verklemmens bzw. Verkantens des Kolbenelements in der Wandlereinheit vermindert werden, indem das Kolbenelement sich entlang einer Achse bewegt, welche den Schnittpunkt von Rad- und Übertragungsachse schneidet, wobei gleichzeitig auch die Kraftübertragung auf das Kolbenelement entlang dieser Achse verläuft. Dabei kann die Kraftübertragung, bzw. die tatsächliche Kraftübertragung von Übertragungselement zu Kolbenelement, durchaus an verschiedenen Punkten erfolgen, wobei diese Punkte jedoch symmetrisch um die Richtung der Kraftübertragung bzw. um eine Achse, welche den Schnittpunkt von Radachse und Übertragungsachse schneidet und insbesondere bevorzugt senkrecht auf der Radachse steht, angeordnet sind.

In einer ferner bevorzugten Ausführungsform ist ein zweites Achselement vorgesehen, welches am ersten Achselement und/oder am Gehäuse der Wandlereinheit festlegbar ist, um das Bremssystem am Fahrzeugrahmen des Nutzfahrzeuges zu lagern. Das zweite Achselement kann insbesondere bevorzugt ein Achsrohr einer starren Achse des Nutzfahrzeuges sein, wobei an den jeweils außen liegenden Enden des Achsrohres das Gehäuse der Wandlereinheit am zweiten Achselement bzw. am Achsrohr festgelegt ist. Weiterhin kann entweder am Gehäuse der Wandlereinheit oder am zweiten Achselement das erste Achselement mittels einer Schweißverbindung festlegbar sein, wobei insbesondere bevorzugt im Bereich des Gehäuses der Wandlereinheit Materialverstärkungen zur Erhöhung der Biegefestigkeit sowohl des ersten als auch des zweiten Achselements vorgesehen sind. Eine wesentliche Aufgabe des zweiten Achselements ist es, das Bremssystem und weitere Fahrwerkskomponenten wie das Rad oder periphere Bremssysteme am Fahrzeugrahmen des Nutzfahrzeuges zu lagern, wobei besonders bevorzugt auch ein Federungssystem am zweiten Achselement eingreift, um die Achselemente und das Bremssystem gefedert am Fahrzeugrahmen festzulegen. Insbesondere bevorzugt ist das zweite Achselement aus einem schweißbaren Material wie beispielsweise Stahl herzustellen, wobei sowohl das Gehäuse der Wandlereinheit als auch das erste Achselement bevorzugt mittels eines Rotationsreibschweißverfahrens oder eines thermischen Schweißverfahrens am zweiten Achselement festlegbar sind.

In einer alternativ bevorzugten Ausführungsform ist ein zweites Achselement vorgesehen, welches an der Führungseinheit festlegbar ist, um das Bremssystem am Fahrzeugrahmen des Nutzfahrzeuges zu lagern. Bei dieser bevorzugten Ausführungsform sind an der Führungseinheit, insbesondere an den beiden Führungsschenkeln der Führungseinheit, Befestigungsmittel, bspw. Aussparungen oder Vorsprünge mit Außengewinde, vorgesehen, welche dazu dienen einen entsprechenden Flansch des zweiten Achselements aufzunehmen. Mit Vorteil kann auf diese Weise die Betätigungseinheit mit einem Winkel von α = 0° relativ zur Radachse angeordnet werden, wobei insbesondere der für das Bremssystem, bzw. die Spreizkeiltrommelbremse benötigte Bauraum reduziert werden kann. Weiterhin bevorzugt ist es, dass das zweite Achselement über eine Vielzahl von Befestigungspunkten, also beispielsweise drei oder vier Befestigungspunkte, die achssymmetrisch zur Radachse angeordnet sind, an der Führungseinheit, bzw. an anderen Befestigungseinheiten des Bremssystems festlegbar ist. Auf diese Weise kann ein höheres Biegemoment von dem Bremssystem, bzw. von dem bevorzugt an dem Bremssystem festgelegten ersten Achselement, an das zweite Achselement übertragen werden. Bevorzugt ist es, dass das erste Achselement und das Gehäuse der Wandlereinheit einstückig mit der Führungseinheit ausgebildet sind und gemeinsam mit dieser am zweiten Achselement festgelegt werden.

Insbesondere bevorzugt kann durch die Integration der Wandlereinheit, der Ummantelung des Übertragungselements und der Führungseinheit in das erste und/oder zweite Achselement der Bremsträger, welcher in aus dem Stand der Technik bekannten Bremssystemen die Betätigungseinheit an dem Fahrwerkssystem aufnimmt, eingespart werden. Dadurch ist das Bremssystem kompakter und leichter als bisherige Bremssysteme.

Weitere Vorteile und Merkmale der vorliegenden Erfindung ergeben sich aus der nachfolgenden Beschreibung mit Bezug auf die beigefügten Figuren. Einzelne Merkmale der verschieden gezeigten Ausführungsform können dabei im Rahmen der Erfindung miteinander kombiniert werden. Es zeigen:
- Fig. 1: eine schematische Darstellung einer bevorzugten Ausführungsform des erfindungsgemäßen Bremssystems,
- Fig. 2: eine weitere schematische Ansicht einer bevorzugten Ausführungsform des erfindungsgemäßen Bremssystems, und
- Fig. 3: eine Schnittansicht einer bevorzugten Ausführungsform des erfindungsgemäßen Bremssystems.

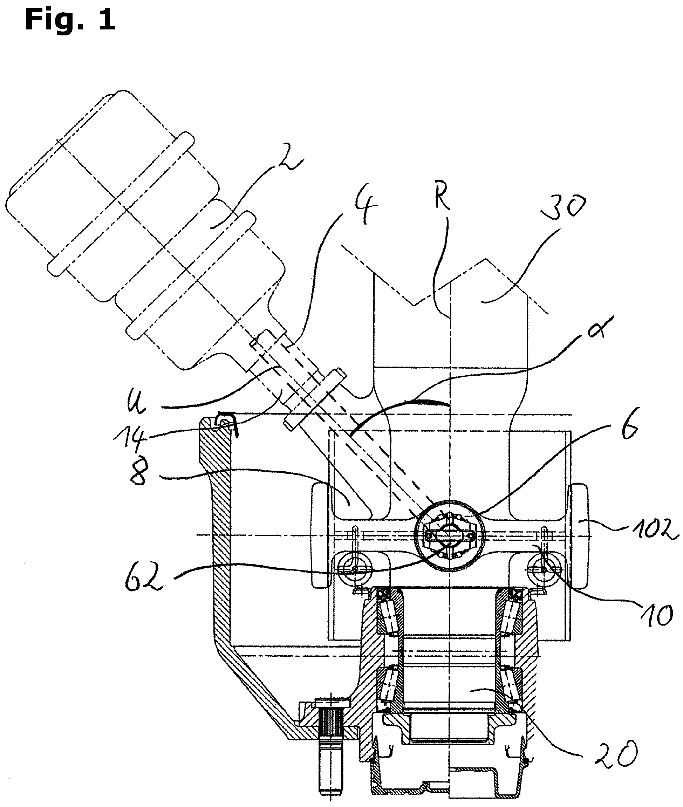

**Fig. 1** zeigt die wesentlichen Komponenten des erfindungsgemäßen Bremssystems, welches bevorzugt als Spreizkeiltrommelbremse ausgebildet ist. Es ist eine Betätigungseinheit 2 vorgesehen, die ein stabförmiges bzw. länglich ausgebildetes Übertragungselement 4 (gestrichelt dargestellt) längs einer Übertragungsachse U verlagert, wobei das Übertragungselement 4 in eine Wandlereinheit 6 hineinragt, um dort in Eingriff mit zumindest einem, bevorzugt zwei Kolbenelementen 62 zu gelangen. Die Betätigungseinheit 2 kann beispielsweise ein pneumatisch betriebener Membranzylinder sein. Die Wandlereinheit 6 ist bevorzugt auf einer Radachse R angeordnet, wobei insbesondere bevorzugt die Bewegungsrichtung des Kolbenelements 62 die Radachse R in dem Punkt schneidet, in dem auch die Übertragungsachse U die Radachse R schneidet. Auf diese Weise ist der Eingriffspunkt des Übertragungselements 4 an dem Kolbenelement 62 genau zentriert zur Bewegungsrichtung des Kolbenelements 62 ausgerichtet. Des Weiteren ist eine Führungseinheit 10, welche zwei Führungsschenkel 102 aufweist, bevorzugt benachbart zur oder innerhalb der Wandlereinheit 6 angeordnet. Die Führungseinheit 10 dient insbesondere bevorzugt der Führung der nicht gezeigten Backenelemente. Einstückig mit dem Gehäuse der Wandlereinheit 6 ausgeführt ist bevorzugt ein erstes Achselement 20, welches einen rotationssymmetrisch um die Radachse R ausgebildeten Bereich zur drehbaren Lagerung eines Rades des Nutzfahrzeuges aufweist. Die Betätigungseinheit 2 stützt sich über eine Ummantelung 14 gegen die Wandlereinheit 6 ab, wobei die Ummantelung 14 bevorzugt das Eindringen von Schmutz sowohl in die Betätigungseinheit 2 als auch in die Wandlereinheit 6 verhindert. Da während des Bremsvorgangs das Übertragungselement 4 von der Betätigungseinheit 2 weggedrückt wird und in die Wandlereinheit 6 hineingedrückt wird, wird die Ummantelung 14 bevorzugt auf Zugspannung belastet und muss entsprechend dimensioniert bzw. ausgelegt sein. Wie in der Figur 1 dargestellt, ist es bevorzugt, die Ummantelung 14, das Gehäuse der Wandlereinheit 6 und das erste Achselement 20 bzw. ebenfalls die Führungseinheit 10 integral bzw. einstückig hergestellt sind. Mit einer gestrichelten Linie ist das zweite Achselement 30 dargestellt, wobei es in der bevorzugten Ausführungsform eine gekrümmte Geometrie aufweist, um mehr Bauraum für die Betätigungseinheit 2 zur Verfügung zu stellen und um den Winkel α zwischen der Radachse R und der Übertragungsachse U klein halten zu können. Insbesondere bevorzugt wird der Verbund aus erstem Achselement 20, Wandlereinheit 6, Führungseinheit 10 und Ummantelung 14 der Übertragungseinheit über eine stoffschlüssige Verbindung am zweiten Achselement 30 festgelegt. Die Führungseinheit 10 umfasst bevorzugt zumindest zwei, insbesondere bevorzugt vier Führungsschenkel 102, wobei je zwei gegenüberliegende Flächen der Führungsschenkel 102 je ein Backenelement 8 auf einer vorzugsweise senkrecht zur Radachse R stehenden Bahn halten. Mittels bevorzugt zweier Kolbenelemente 62, von denen nur das vom Betrachter aus obere dargestellt ist, werden die Backenelemente 8 gegen eine das Bremssystem umgebende Bremstrommel gepresst, wobei Reibung zwischen den Backenelementen 8 und der Innenfläche der Bremstrommel stattfindet. Am ersten Achselement 20 ist schematisch ein Radlager, insbesondere ein Wälzlager, zur drehbaren Lagerung eines Rades des Nutzfahrzeugs um die Radachse R angedeutet.

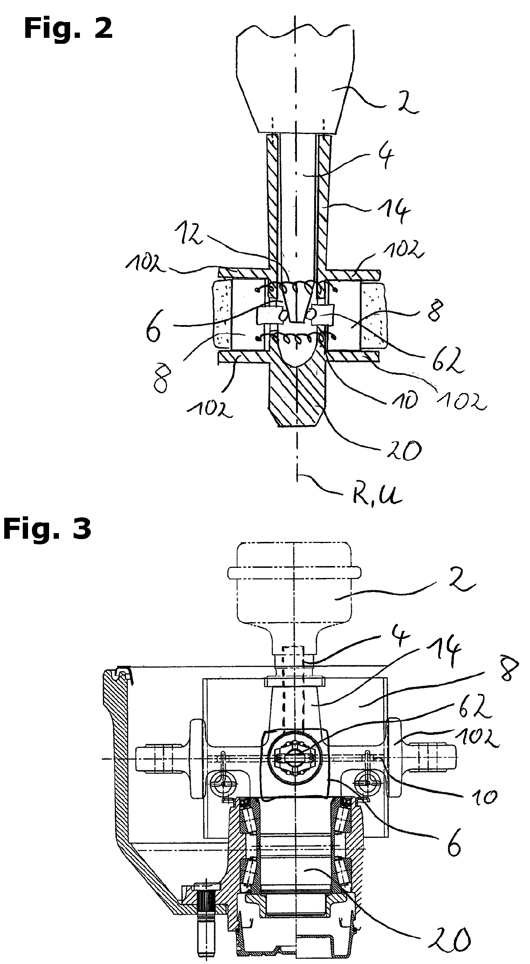

**Fig. 2** zeigt eine weitere bevorzugte Ausführungsform des erfindungsgemäßen Bremssystems. Von der gezeigten Beobachtungsperspektive ist die Radachse R scheinbar kollinear zur Übertragungsachse U. Dargestellt ist weiterhin die bevorzugt keilförmige Geometrie an der unteren Spitze des Übertragungselements 4, welche in Kontakt mit zwei an den Kolbenelementen 62 angebrachten Rollenelementen bzw. Wälzkörpern steht und bei Verlagerung des Übertragungselements 4 entlang der Übertragungsachse U den Abstand der beiden Kolbenelemente 62 voneinander vergrößert. An den Kolbenelementen 62 ist je ein Backenelement 8 festgelegt, welches bei Verlagerung des Kolbenelements 62 ebenfalls verlagert wird. Die Backenelemente 8 werden bei dieser Verlagerungsbewegung durch die Führungsschenkel 102 auf einer quer zur Radachse R liegenden Bahn gehalten. Weiterhin ist ein Rückstellelement 12 vorgesehen, welches jeweils mit den Backenelementen 8 in Eingriff steht, um diese gegen die Kolbenelemente 62 gepresst zu halten.

**Fig. 3** zeigt eine Schnittansicht einer bevorzugten Ausführungsform des erfindungsgemäßen Bremssystems. Deutlich erkennbar ist, dass an den Führungsschenkeln 102 der Führungseinheit 10 jeweils ein vorsprungsartiger Materialsteg vorgesehen ist, an welchem insbesondere bevorzugt ein zweites Achselement festlegbar ist. Bei dieser bevorzugten Ausführungsform kann die Betätigungseinheit 2 koaxial zur Radachse R angeordnet werden, wobei entsprechende Befestigungsabschnitte des zweiten Achselements 30 die Betätigungseinheit umgeben. Der Betätigungseinheit 2 gegenüberliegend, ist das erste Achselement 20 an der Wandlereinheit 6, welche wiederum integral mit der Führungseinheit 10 ausgebildet ist, festgelegt. In der Figur 3 ist lediglich das vom Betrachter aus unten liegende Backenelement 8 dargestellt, wobei das oben liegende Backenelement 8 aus Gründen der Übersichtlichkeit nicht gezeigt ist. Mit einer gestrichelten Linie ist das Übertragungselement 4 angedeutet, welches sich in der Ummantelung 14 zwischen der Betätigungseinheit 2 und der Wandlereinheit 6 befindet und eine Kraft von der Betätigungseinheit 2 zur Wandlereinheit 6 überträgt. Auf der linken Seite angedeutet ist die Bremstrommel des Bremssystems, welche an dem rotierenden Teil des Fahrwerks, bspw. der Felge des Rades, festlegbar ist und während des Bremsvorgangs an einem bevorzugt vorgesehenen Reibbelag des Backenelements 8 reibt.

### Bezugszeichen:

- 2: - Betätigungseinheit
- 4: - Übertragungselement
- 6: - Wandlereinheit
- 8: - Backenelement
- 10: - Führungseinheit
- 12: - Rückstellelement
- 14: - Ummantelung
- 20: - erstes Achselement
- 30: - zweites Achselement
- 62: - Kolbenelement
- 102: - Führungsschenkel
- R: - Radachse
- U: - Übertragungsachse
- α: - Winkel

## Patentansprüche

1. Bremssystem, für Nutzfahrzeuge, umfassend eine Betätigungseinheit (2), ein Übertragungselement (4) und eine Wandlereinheit (6),
wobei die Betätigungseinheit (2) das Übertragungselement (4) entlang einer Übertragungsachse (U) verlagert,
wobei die Wandlereinheit (6) auf einer Radachse (R) angeordnet ist und zumindest ein Kolbenelement (62) aufweist,
wobei die Wandlereinheit (6) ein Gehäuse aufweist, welches einstückig mit einem ersten Achselement (20) ausgebildet ist,
wobei die Übertragungsachse (U) die Radachse (R) zumindest im Bereich der Wandlereinheit (6) schneidet, und
wobei das Übertragungselement (4) ausgelegt ist, eine Kraft auf das Kolbenelement (62) zu übertragen, um dieses quer zur Radachse (R) zu verlagern, wobei das Übertragungselement (4) zumindest abschnittsweise in einer Ummantelung (14) geführt ist, und
wobei die Ummantelung (14) die Betätigungseinheit (2) gegen die Wandlereinheit (6) abstützt,
**dadurch gekennzeichnet, dass** das Gehäuse der Wandlereinheit (6) einstückig mit der Ummantelung (14) ausgebildet ist.

2. Bremssystem nach Anspruch 1,
wobei ein Backenelement (8) vorgesehen ist, das quer zur Radachse (R) verlagerbar ist, und
wobei das Backenelement (8) an seiner, der Radachse (R) gegenüber liegenden Seite, bevorzugt einen Bremsbelag aufweist.

3. Bremssystem nach Anspruch 2,
wobei das Kolbenelement (62) ausgelegt ist, eine Kraft auf das Backenelement (8) auszuüben, um das Backenelement (8) quer zur Radachse (R) zu verlagern und in eine Position zu bringen, in welcher das Backenelement bremst.

4. Bremssystem nach einem der Ansprüche 2 bis 3,
wobei eine Führungseinheit (10) vorgesehen ist, um das Backenelement (8) auf einer quer zur Radachse (R) liegenden Bahn zu halten.

5. Bremssystem nach Anspruch 4,
wobei die Führungseinheit (10) zwei parallel zueinander stehende Führungsschenkel (102) aufweist, zwischen deren einander zugewandten Flächen das Backenelement (8) geführt wird.

6. Bremssystem nach Anspruch 5,
wobei die Flächen der Führungsschenkel (102) der Führungseinheit (10) senkrecht zur von der Radachse (R) und der Übertragungsachse (U) aufgespannten Ebene ausgerichtet sind.

7. Bremssystem nach einem der vorhergehenden Ansprüche,
wobei die Radachse (R) zur Übertragungsachse (U) um einen Winkel (α) versetzt ist, welcher vorzugsweise in einem Bereich von 0° bis 85°, bevorzugt 0° bis 75° und insbesondere bevorzugt bei ca. 45° liegt.

8. Bremssystem nach einem der vorhergehenden Ansprüche,
wobei das Gehäuse der Wandlereinheit (6) bevorzugt durch zumindest eine Aussparung im ersten Achselement (20) gebildet ist.

9. Bremssystem nach einem der Ansprüche, 4 bis 6 wobei das Gehäuse der Wandlereinheit (6) einstückig mit der Führungseinheit (10) ausgebildet ist.

10. Bremssystem nach einem der vorhergehenden Ansprüche,
wobei das Übertragungselement (4) an seinem der Betätigungseinheit (2) abgewandten distalen Ende eine zur Betätigungseinheit (2) hin zunehmende Querschnittsdicke aufweist,
wobei das Kolbenelement (62) mit seiner, zur Radachse (R) weisenden Seite auf dem Übertragungselement (4) mittelbar oder unmittelbar aufliegt.

11. Bremssystem nach einem der vorhergehenden Ansprüche,
wobei die Richtung der Kraftübertragung von Übertragungselement (4) zu Kolbenelement (62) durch den Schnittpunkt von Radachse (R) und Übertragungsachse (U) verläuft.

12. Bremssystem nach einem der vorhergehenden Ansprüche,
wobei ein zweites Achselement (30) vorgesehen ist, welches am ersten Achselement (20) und/oder am Gehäuse der Wandlereinheit (6) festlegbar ist, um das Bremssystem am Fahrzeugrahmen des Nutzfahrzeuges zu lagern.

13. Bremssystem nach einem der Ansprüche 4 bis 11,
wobei ein zweites Achselement (30) vorgesehen ist, welches an der Führungseinheit (10) festlegbar ist, um das Bremssystem am Fahrzeugrahmen des Nutzfahrzeuges zu lagern.

14. Bremssystem nach einem der Ansprüche 2 bis 13,
wobei Rückstellelement (12) vorgesehen, durch welches das Backenelement (8) gegen das Kolbenelement (62) und/oder ein gegenüber liegendes Backenelement (8) gehalten ist.

## Claims

1. Brake system, for utility vehicles, comprising an actuation unit (2), a transmission element (4) and a converter unit (6),
wherein the actuation unit (2) moves or displaces the transmission element (4) along a transmission axis (U),
wherein the converter unit (6) is arranged on a wheel axis (R) and comprises at least one piston element (62),
wherein the converter unit (6) has a housing, which forms an integral part of a first axle element (20),
wherein the transmission axis (U) intersects the wheel axis (R) at least in the region of the converter unit (6), and
wherein the transmission element (4) is adapted or designed to transmit a force onto the piston element (62) in order to move or displace the latter transverse to the wheel axis (R),
wherein at least a certain portion of the transmission element (4) is guided in a casing (14), and
wherein the casing (14) supports the actuation unit (2) against the converter unit (6),
**characterized in that** the housing of the converter unit (6) forms an integral part of the casing (14).

2. The brake system of claim 1,
wherein there is provided a shoe element or brake shoe element (8), which is movable or displaceable transverse to the wheel axis (R), and
wherein the shoe element (8) at the side thereof opposite the wheel axis (R) preferably has a brake lining.

3. The brake system of claim 2,
wherein the piston element (62) is adapted to exert a force onto the shoe element (8) in order to displace the shoe element (8) transverse to the wheel axis (R) and to bring it into a position, in which the shoe element brakes.

4. The brake system of any one of claims 2 to 3,
wherein there is provided a guiding unit (10) in order to hold the shoe element (8) on a path lying transverse to the wheel axis (R).

5. The brake system of claim 4,
wherein the guiding unit (10) has two parallel guiding legs (102), between the facing surfaces of which the shoe element (8) is guided.

6. The brake system of claim 5,
wherein the surfaces of the guiding legs (102) of the guiding unit (10) are directed vertical or perpendicular to the plane spanned by the wheel axis (R) and the transmission axis (U).

7. The brake system of any one of the preceding claims,
wherein the wheel axis (R) is displaced relative to the transmission axis (U) by an angle (α), which is preferably in a range of 0° to 85°, more preferably in a range of 0° to 75°, and particularly preferably about 45°.

8. The brake system of any one of the preceding claims,
wherein the housing of the converter unit (6) preferably is formed by at least one cavity in the first axle element (20).

9. The brake system of any one of claims 4 to 6,
wherein the housing of the converter unit (6) forms an integral part of the guiding unit (10).

10. The brake system of any one of the preceding claims,
wherein the transmission element (4) at the distal end thereof facing away from the actuation unit (2) has a cross-sectional thickness, which increases towards the actuation unit (2),
wherein the piston element (62) with the side thereof facing the wheel axis (R) indirectly or directly rests on the transmission element (4).

11. The brake system of any one of the preceding claims,
wherein the direction of the force transmission from the transmission element (4) to the piston element (62) runs through the intersection of the wheel axis (R) and the transmission axis (U).

12. The brake systems of any one of the preceding claims,
wherein there is provided a second axle element (30), which can be fixed to the first axle element (20) and/or the housing of the converter unit (6) in order to support the brake system on the vehicle frame of the utility vehicle.

13. The brake system of any one of claims 4 to 11,
wherein there is provided a second axle element (30), which can be fixed to the guiding unit (10) in order to support the brake system on the vehicle frame of the utility vehicle.

14. The brake system of any one of claims 2 to 13,
wherein there is provided a resetting element (12), by means of which the shoe element (8) is held against the piston element (62) and/or an opposite shoe element (8).

## Revendications

1. Système de freinage pour véhicules utilitaires, incluant une unité d'actionnement (2), un élément de transmission (4) et une unité de conversion (6),
dans lequel l'unité d'actionnement (2) déplace l'élément de transmission (4) le long d'un axe de transmission (U),
dans lequel l'unité de conversion (6) est agencée sur un axe de roue (R) et comprend au moins un élément en piston (62),
dans lequel l'unité de conversion (6) comprend un boîtier qui est réalisé d'une seule pièce avec un premier élément d'essieu (20),
dans lequel l'axe de transmission (U) recoupe l'axe de roue (R) au moins dans la région de l'unité de conversion (6), et
dans lequel l'élément de transmission (4) est conçu pour transmettre une force à l'élément en piston (62) afin de déplacer celui-ci transversalement à l'axe de roue (R),
dans lequel l'élément de transmission (4) est guidé au moins par tronçons dans une enveloppe (14), et
dans lequel l'enveloppe (14) soutient l'unité d'actionnement (2) contre l'unité de conversion (6),
**caractérisé en ce que** le boîtier de l'unité de conversion (6) est réalisé d'une seule pièce avec l'enveloppe (14).

2. Système de freinage selon la revendication 1,
dans lequel il est prévu un élément support (8), qui est déplaçable transversalement à l'axe de roue (R), et
dans lequel l'élément support (8) comprend de préférence une garniture de frein sur son côté situé à l'opposé de l'axe de roue (R).

3. Système de freinage selon la revendication 2,
dans lequel l'élément en piston (62) est conçu pour exercer une force sur l'élément support (8), afin de déplacer l'élément support (8) transversalement à l'axe de roue (R) et l'amener jusque dans une position dans laquelle l'élément support freine.

4. Système de freinage selon l'une des revendications 2 à 3,
dans lequel il est prévu une unité de guidage (10) afin de maintenir l'élément support (8) sur une voie placée transversalement à l'axe de roue (R).

5. Système de freinage selon la revendication 4,
dans lequel l'unité de guidage (10) comprend deux branches de guidage (102) parallèles l'une à l'autre, telles que l'élément support (8) est guidé entre les surfaces des branches tournées l'une vers l'autre.

6. Système de freinage selon la revendication 5,
dans lequel les surfaces des branches de guidage (102) de l'unité de guidage (10) sont orientées perpendiculairement au plan défini par l'axe de roue (R) et par l'axe de transmission (U).

7. Système de freinage selon l'une des revendications précédentes,
dans lequel l'axe de roue (R) est décalé par rapport à l'axe de transmission (U) d'un angle (α) qui tombe de préférence dans une plage de 0° à 85°, de préférence de 0° à 75°, et de manière particulièrement préférée d'environ 45°.

8. Système de freinage selon l'une des revendications précédentes,
dans lequel le boîtier de l'unité de conversion (6) est formé de préférence par au moins un évidement dans le premier élément d'essieu (20).

9. Système de freinage selon l'une des revendications 4 à 6,
dans lequel le boîtier de l'unité de conversion (6) est réalisé d'une seule pièce avec l'unité de guidage (10).

10. Système de freinage selon l'une des revendications précédentes,
dans lequel l'élément de transmission (4) présente, à son extrémité distale détournée de l'unité d'actionnement (2) une épaisseur de section transversale qui augmente vers l'unité d'actionnement (2),
dans lequel l'élément en piston (62) s'applique avec son côté tourné vers l'axe de roue (R) directement ou indirectement sur l'élément de transmission (4).

11. Système de freinage selon l'une des revendications précédentes,
dans lequel la direction de la transmission de force de l'élément de transmission (4) vers l'élément en piston (62) passe par le point d'intersection de l'axe de roue (R) et de l'axe de transmission (U).

12. Système de freinage selon l'une des revendications précédentes,
dans lequel il est prévu un second élément d'essieu (30), qui est susceptible d'être fixé sur le premier élément d'essieu (20) et/ou sur le boîtier de l'unité de conversion (6) afin de monter le système de freinage sur le châssis du véhicule utilitaire.

13. Système de freinage selon l'une des revendications 4 à 11,
dans lequel il est prévu un second élément d'essieu (30), qui est susceptible d'être fixé sur l'unité de guidage (10) afin de monter le système de freinage sur le châssis du véhicule utilitaire.

14. Système de freinage selon l'une des revendications 2 à 13,
dans lequel il est prévu un élément de rappel (12) grâce auquel l'élément support (8) est maintenu contre l'élément en piston (62) et/ou contre un élément support (8) situé à l'opposé.
